Europäisches Patentamt

European Patent Office

Office européen des brevets

(11) Publication number: 0 261 681 A2

# EUROPEAN PATENT APPLICATION

(21) Application number: 87113982.0

(22) Date of filing: 24.09.87

(51) Int. Cl.4: B29C 67/14 , A47B 96/02

(30) Priority: 24.09.86 US 910975

(43) Date of publication of application:
30.03.88 Bulletin 88/13

(84) Designated Contracting States:
DE FR GB NL

(71) Applicant: InterMetro Industries Corporation
North Washington Street
Wilkes-Barre Pennsylvania 18705(US)

(72) Inventor: Montalbano, Anthony Philip
33 Mohring Bay Court
Bayville New York 11709(US)
Inventor: Cummings, Bruce C.
19 Wedgewood Lane
East Northport New York 11731(US)
Inventor: Hohlbein, Douglas J.
207 Sugarwood Lane
Central Islip New York 11722(US)
Inventor: Simmons, Sean H.
1 Ascot Ridge
Great Neck New York 11021(US)

(74) Representative: Schmidt-Evers, Jürgen,
Dipl.-Ing.
Patentanwälte Dipl.-Ing. H. Mitscherlich
Dipl.-Ing. K. Gunschmann Dipl.-Ing.
Dr.rer.nat. W. Körber Dipl.-Ing. J.
Schmidt-Evers Dipl.-Ing. W. Melzer
Steinsdorfstrasse 10
D-8000 München 22(DE)

(54) Composite article, such as a shelf or the like, and method for making same.

(57) An article, such as a shelf (10) or the like, has a periphery and includes a plurality of substantially continuous fibers (32) wound into a shape generally defining the periphery. The fibers (32) are wound a plurality of times in this shape thereby to overlie themselves at least once. A first resinous material (34) binds the continuous fibers (32) together thereby to form a continuous peripheral core member. A separate outer coating of a second resinous material encapsulates the core member and is intimately bound to the first resinous material (34). A method or process of making this article includes the steps of providing a form (54) defining the shape of the periphery, providing a plurality of substantially continuous fibers (32), disposing the first resinous material (34) in intimate contact with the plurality of fibers, and winding the plurality of fibers (32) and the first resinous material (34) about the form (54) a plurality of times. Accordingly, the plurality of fibers overlie themselves at least one time. The first resinous material (34) is then solidified and the peripheral core member thereby defined is removed from the form (54). The core member is then encapsulated in a second resinous material with the second resinous material intimately bound to the first resinous material. Finally, the second resinous material is solidified.

Fig. 1.

1a.

## COMPOSITE ARTICLE, SUCH AS A SHELF OR THE LIKE, AND METHOD FOR MAKING SAME

### BACKGROUND OF THE INVENTION

#### Field of the Invention

The present invention relates to a composite article and a method for making it. This invention has particular utility embodied in articles such as shelves, trays and similar articles having a periphery that desirably is reinforced or otherwise provides principal structural integrity for the article.

#### Description of the Prior Art

Articles such as shelves and the like are well known. For example, U.S. Patent No. 3,757,705 (Maslow), assigned to the assignee of the subject invention, discloses a modular shelving system that comprises four corner posts which support one or more shelves. Each shelf is made of wire formed as various components, including four peripheral frame members, a plurality of laterally extending shelf wire members and another plurality of longitudinally extending shelf wire members that together define an object-supporting surface of the shelf. A frusto-conical sleeve is welded at each corner formed by adjacent peripheral frame members and receives a similar frusto-conical collar carried on one corner post. In this way the shelf is supported by the posts.

While the shelving system, and particularly the shelf structure, of the Maslow patent has great utility in many applications, further improvements can still be made to them.

The wire shelf of the type to which the Maslow Patent relates is particularly advantageous for use in an industrial and commercial food service applications because it may be easily cleaned. However, further improvements in the shelf may still be made by reducing the number of the crevasses or other areas which might collect contaminants and by making such areas more easily accessible to cleaning utensils.

Because the shelf is made of wire, it may also corrode or otherwise deteriorate in certain environments. It is possible to make the wire shelf components of stainless steel or to coat or plate them with a corrosion resistant material, such as epoxy or zinc, but such efforts increase the cost of the shelf.

It is also desirable that shelves generally have a high strength to-weight ratio at least equal to that of the type to which the Maslow Patent relates.

It is still further desirable to retain the open appearance provided by the wire web configuration of the shelf structure described in the Maslow patent, which offers minimal obstruction of view of objects supported on it.

Articles and processes for making compound composite resinous structures are also known. For example, U.S. Patents Nos. 4,312,917 and 4,439,387, both to Hawley, describe a compound composite article and method of making it in which a reinforcing composite insert structure is formed of fiberous material embedded in a first thermoplastic resinous material. This composite insert structure is thereafter injection molded within an outer casing comprised of a second resinous material. However, the article and method of the Hawley Patents are not previously believed to have been applied in the manufacture of an article such as a shelf or the like having a periphery which provides principal structural integrity therefor.

### SUMMARY OF THE INVENTION

Accordingly, it is an object of the present invention to provide a composite article, like as a shelf, tray, or similar article, that is an improvement upon articles known in the prior art, such as are described in U.S. Patent No. 3,757,705 (Maslow).

More particularly, it is an object of the present invention to provide a composite article, such as a shelf, tray, or the like, that has a high strength to-weight ratio, yet which may be manufactured with relatively inexpensive, non-corroding materials.

It is a further object of the present invention to provide a composite article such as a shelf, that is designed to be easily cleaned, thus to facilitate sanitation.

It is still a further object of the present invention to provide a composite article such as a shelf that may be used with existing or modified modular shelving systems and that has an open appearance providing easy visual access to objects stored thereon.

Another aspect of the present invention provides a method for making a composite article, such as a shelf, having the attributes mentioned above.

In accordance with a preferred embodiment, the article of the present invention is a shelf or the like and includes a periphery providing principal structural integrity. This article comprises a plurality of substantially continuous fibers wound into a shape generally defining the periphery. These fibers are wound a plurality of times in this shape, thereby to overlie or overlap themselves at least one time. A first resinous material binds the continuous fibers together, thereby to form a continuous composite peripheral core member that provides high structural integrity for the article. A separate outer coating of a second resinous material encapsulates the core member and is intimately bound to the first resinous material thereby to constitute a compound structure. At least one stiffening member spans the distance between two opposing locations of the peripheral core member and the stiffening member is encapsulated with the peripheral core member by the second resinous material as part of the compound structure. The stiffening member may also be formed of a plurality of substantially continuous fibers bound together by a third resinous material.

It is desirable that the first, second, and third resinous materials be compatible and in the preferred embodiment these materials are a thermoplastic, such as polypropylene.

The continuous fibers forming a part of the peripheral core member and the stiffening member may be made from a material selected from the group consisting of glass, carbon, boron, and synthetic fibers such as those sold under the trademark KEVLAR by E.I. du Pont de Nemours and Co.

In accordance with a preferred embodiment, the method of the present invention for making a composite article such as a shelf or the like includes the steps of providing a form defining the shape of the periphery of the article, providing a plurality of substantially continuous fibers and disposing a first resinous material in intimate contact with the plurality of fibers. The plurality of fibers and first resinous material are then wound about the form a plurality of times whereby the fibers are placed in overlying or overlapping relation with themselves at least one time. The first resinous material is solidified thereby to constitute the composite peripheral core member which is thereafter removed from the form. The peripheral core member is then encapsulated in the second resinous material which is intimately bound to the first resinous material to constitute the compound structure. Finally, the second resinous material is solidified.

Solidifying of both the first and second resinous materials may be achieved by heating them. Encapsulating of the peripheral core member in the second resinous material may be achieved by, for example, injection, compression, transfer, or wet molding. The second resinous material preferably is a thermoplastic and encapsulates the peripheral core member at a temperature sufficient to melt the first resinous material, when a thermoplastic, at the surface thereof such that the first and second resinous materials are fused together.

A more complete appreciation of the present invention and a more complete and thorough understanding of these and other objects, aspects and features of it will be provided in the following detailed description considered in conjunction with the accompanying drawing.

## BRIEF DESCRIPTION OF THE DRAWING

Figure 1 is a perspective view, partly broken away to show internal detail, of a composite article in the form of a shelf in accordance with a preferred embodiment of the present invention.

Figure 2 is a top plan view of the composite shelf in accordance with the present invention.

Figure 3 is a diagrammatic top plan view, of a machine for forming ribbons comprising substantially continuous fibers and a first resinous material in intimate contact therewith.

Figure 4 is a front elevational view, also in diagrammatic form, of the ribbon-forming machine shown in Figure 3.

Figure 5 is a diagrammatic front elevational view of a machine carrying a plurality forms on which ribbons produced by the machine shown in Figures 3 and 4 are wound to define the peripheral core members for the article of the invention.

Figure 6 is an exploded perspective view of the peripheral core member, one stiffening member, and corner reinforcing members.

Figure 7 is a perspective view of the corner reinforcing member which may form a part of the composite shelf in accordance with the preferred embodiment of the present invention to adapt it for use in known modular shelving systems.

Figure 8 is a diagrammatic front elevational view of a molding machine such as an injection molding machine, for encapsulating the peripheral core, stiffening members and corner reinforcing members within the second resinous material.

Figure 9 is a diagrammatic perspective view of apparatus for forming flared projections in the edges of the peripheral core and stiffening members for locating the members within the mold cavity of the molds of the machine shown in Figure 8.

Figures 10 and 11 are vertical cross sectional views taken on plane 10-10 in Figure 9.

Figure 12 is a vertical cross-sectional view of the mold and mold cavity showing how the flared projections locate a core or stiffening member therein.

## DETAILED DESCRIPTION OF THE PREFERRED EMBODIMENTS

The present invention is directed to a composite article and a method of making that article. This invention has particular utility for making articles like shelves that may be used in modular shelving systems such as is disclosed in U.S. Patent No. 3,757,705 (Maslow). However, this invention may be used with advantage in conjunction with other articles that have a peripheral reinforcing structure and secondary structure mounted within the peripheral reinforcing structure. For example, this invention may be used to make trays or other similar articles. However, for convenience, the present invention will be described in the context of a shelf.

Moreover, it is to be understood that the term "periphery" as used herein is not used in the strict sense as meaning an outer boundary. Rather the present invention contemplates an article having a so-called periphery that nevertheless includes structures lying outside this periphery, and the term is therefore more broadly used to mean hoop- or ring-like.

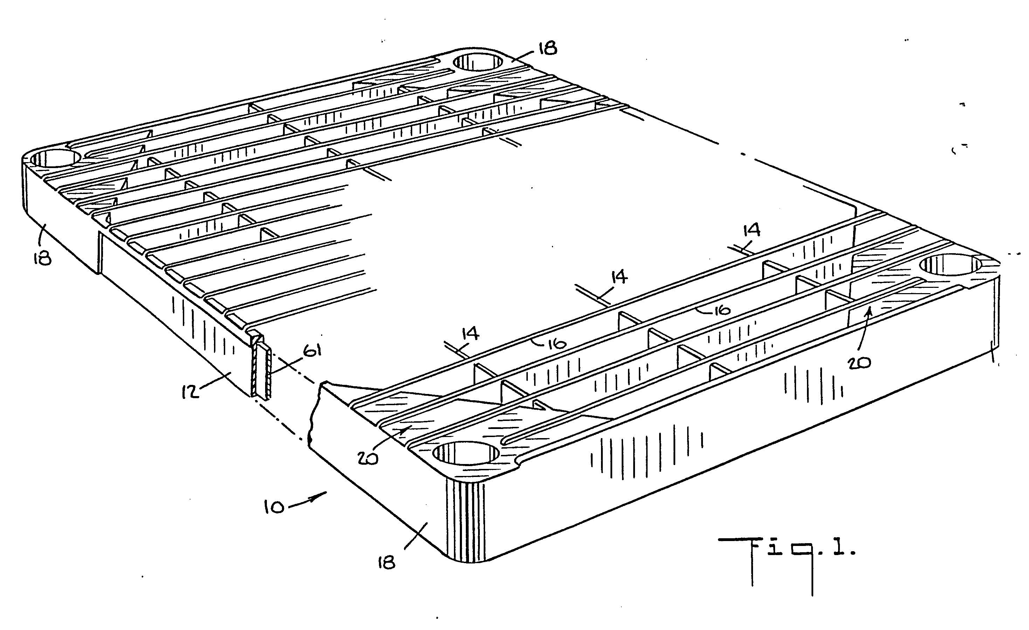

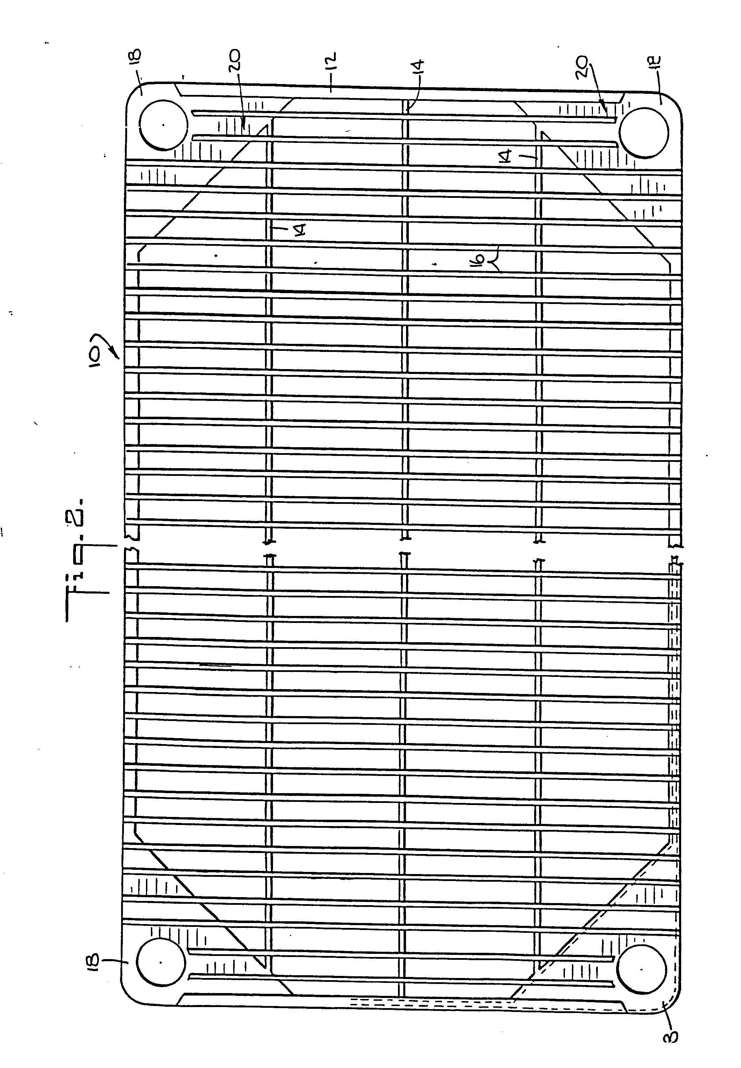

Referring now to Figures 1 and 2, a composite article in the form of a shelf in accordance with a preferred embodiment of the present invention is illustrated generally at 10. This shelf includes a frame 12, which defines the shelf periphery, three laterally extending stiffening members 14 and a large plurality of longitudinally extending stiffening members 16. The laterally extending and longitudinally extending stiffening members 14 and 16 form a grid extending across the frame 12 and the members 16 define a supporting surface on which objects may be placed.

The shelf 10 includes four corners 18 each of which is equipped with a corner structure 20 having a frusto-conical sleeve or hole 22 extending vertically through it. The sleeve is formed to mate with a frusto conical collar (not shown) that in turn is formed to mate with a vertically extending corner post (not shown) having a plurality of annular ribs therein. The sleeve, collar, and corner post assembly may be of the type described in the U.S. Patent No. 3,757,705 (Maslow), which is incorporated herein by reference.

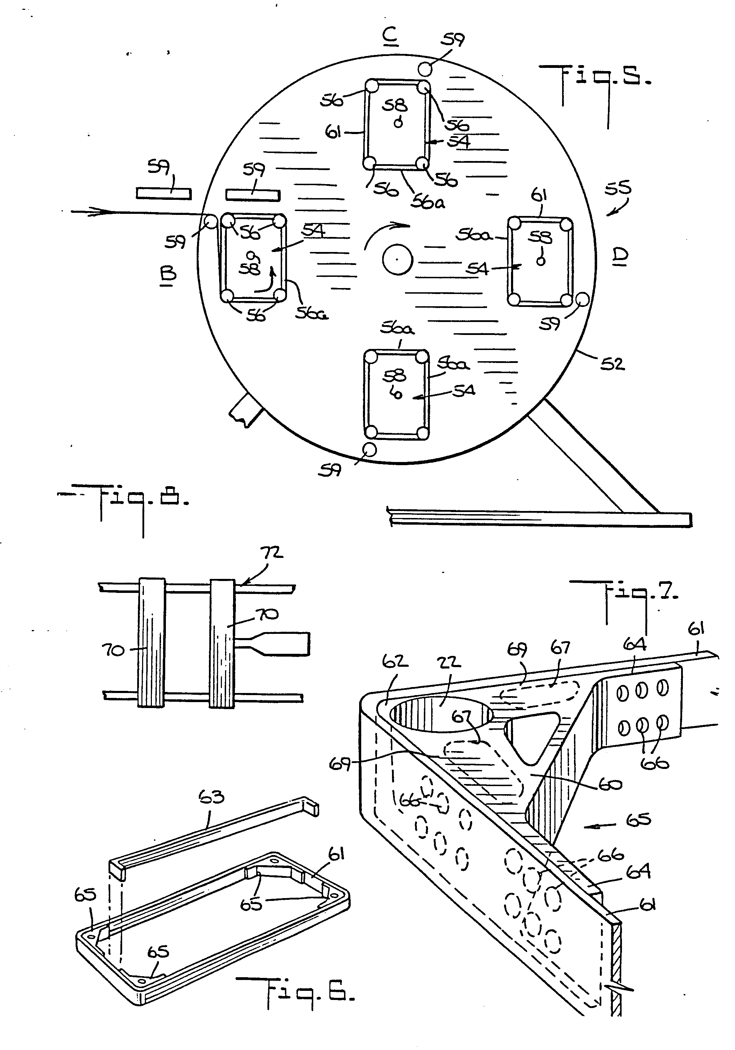

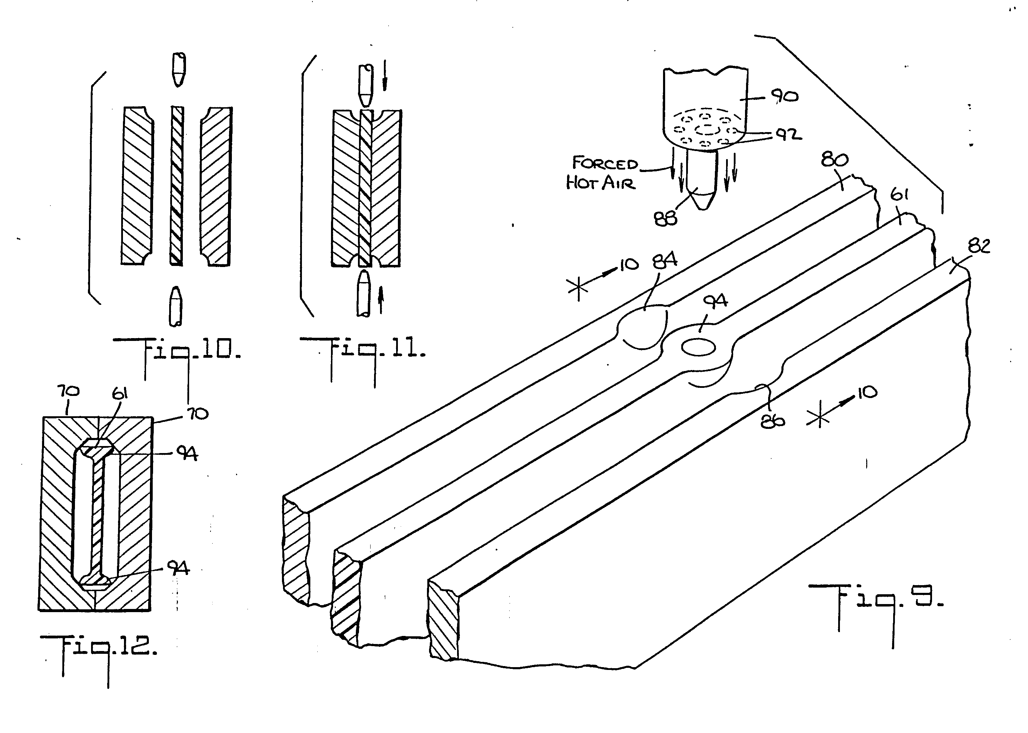

As will be described in greater detail below, the frame 12 is formed of a composite peripheral core member comprising a plurality of continuous fibers bound together by a first resinous material. The peripheral core member along with one or more composite laterally and longitudinally extending stiffening insert members and the corner insert structures, also to be described in detail below, are encapsulated in a second resinous material. As shown in Figure 6, in one embodiment, only the central laterally extending stiffening member is provided with a reinforcing insert. The encapsulation may be achieved, again as described in greater detail below, by injection, compression, transfer, or wet molding, or the like. Accordingly, it will be appreciated that, as shown in Figures 1 and 2, the shelf may be molded with smooth contours that do not encourage accumulation of debris. Moreover, these contours may be molded in aesthetically pleasing ways to enhance the desirability of a shelf in accordance with the present invention. Still further, it will be appreciated from Figures 1 and 2 that the shelf also has an open, visually light appearance that permits easy viewing of objects supported on it.

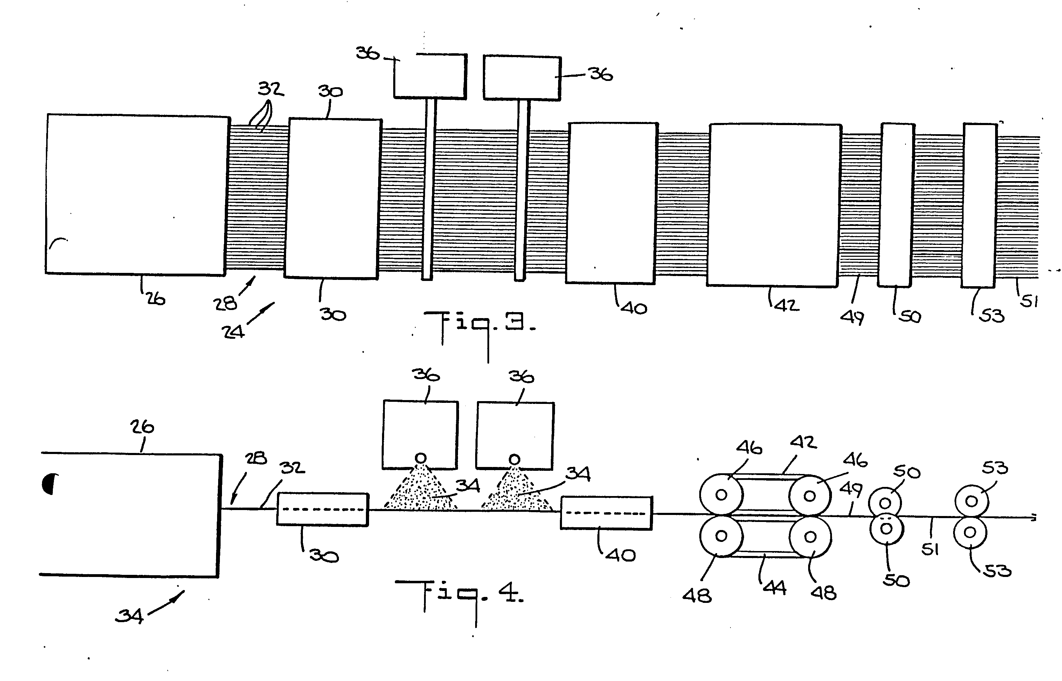

Referring now to Figures 3 and 4, a machine for forming ribbons, from which the peripheral frame 12 is made, are diagrammatically illustrated. This machine, generally indicated at 24, includes a 60 spool creel 26 for supporting 60 spools (not shown) of fibers. Each spool stores a group or "tow" of continuous fibers 32 that may be, for example, glass, carbon, boron, or synthetic fibers such as nylon and KEVLAR.

A large plurality, namely 60, of the fiber tows is paid off the spools from the creel 26 and is formed into a broad, thin band 28 that is initially heated by a convection oven 30. Thereafter, a first powdered resinous material 34 is sprinkled from two powder feeders 36 onto the band 38 of fibers 32. The fiber band and resinous material are then passed into an IR oven 40 that causes the powdered resinous material 34 at least initially to melt into intimate contact with all of the fibers comprising the band.

The first resinous material 34 need not be powdered and can be applied to the fiber tows in other ways. For example the material can be extruded as a sheet and laid on top of the tows.

In the preferred embodiment, the first resinous material may either be thermoplastic or thermosetting. Suitable thermoplastic materials include polypropylene, polyethylene terephthate (PET), polystyrene, polyphenylene sulfide and polyethersulfone. Suitable thermosetting materials include polyester. From the point of view of cost, polypropylene is most preferable.

After emerging from the IR oven 40 and prior to solidifying of the first resinous material, the band 38 and resinous material are passed between traveling upper and lower belts 42 and 44, mounted on respective upper and lower pairs of rollers 46 and 48 to calender the fibers and band into a broad ribbon 49 of a desired thickness.

After calendaring between the belts 42 and 44, the broad ribbon 49 is conveyed to a slitter 50 that slits it into a number of relatively narrow ribbon portions 51 that are pulled away by feed rollers 53.

As can clearly be seen in Figure 5, after being slit, each ribbon portion (hereinafter simply "ribbon") 51 is conveyed, either directly or after a period of storage, to a peripheral core forming device or machine, generally indicated at 55, having a large circular table 52 mounted for rotation in a base 57 and carrying, for example, four equally spaced and rotatable forms 54. Each form 54 may comprise four mandrels 56 and four interconnecting side pieces 56a that define the corners and remaining shape of the frame 12 and peripheral core member 61 which will form it. Each form 54 is further rotatable on the circular table, for example, about a stub shaft 58.

As can be seen in Figure 5, the circular table is rotated to position each form 54 at each of four stations including (1) an insert loading, preheating station A, (2) a ribbon winding station B, (3) a post-core-member forming, cool down station C, and (4) a core member off-loading station D. At station A, the form is initially preheated to receive a ribbon 51 from the ribbon forming machine 24. The table is then rotated to bring the preheated form to station B, which is also equipped with two stationary IR heaters 59 to prevent the first resinous material in the ribbon 51 from solidifying prematurely. At station B, one end of a ribbon 51 is guided over a guide roller 59 and is secured to one mandrel 56. The form 54 of which this mandrel forms a part is then rotated on its stub shaft 58 to pull the ribbon from the ribbon forming machine over the guide roller 59 and wind the ribbon about the remaining three mandrels 56. The form is rotated, for example, ten times so that the fibers overlie themselves also ten times to form a peripheral core member 61 of about 1/8 inch thick. Since the first resinous material is not yet solidified, it adheres to itself in adjacent overlying layers of the fibers. Intimate contact of the first resinous material with all fibers is enhanced by this winding or wrapping step since the ribbon is under at least a slight tension when pulled from the slitter 50 and feed rollers 53.

While the forms 54 are each described as being mounted on a stub shaft 58 for rotation on the table 52, it is preferrable that a mechanism (not shown) be provided to rotate each form so that its periphery travels at a constant linear speed and that the ribbon 51 is therefore, pulled from the ribbon forming machine also at a constant linear speed. Such mechanism is within the skill of the art and, accordingly, will not be described in detail here.

When a suitable number of rotations, as mentioned ten, of the form have been completed, the ribbon wound thereon is cut laterally and the circular table is rotated to move the form 54 previously at station B to station C so that the peripheral core member 61 thus created may cool down.

A subsequent rotation of the circular table 52 moves the form 54 from station C to station D where the now completed peripheral core member 61 can be off-loaded. It will be appreciated that each successive form 54 is moved through the stations A, B, C, and D so that operations at each are always being performed, thereby to enhance productivity.

It will be also appreciated that inserts for the stiffening members 14 and 16, or for just one member 16 in accordance with the preferred embodiment of the shelf 10 may be formed in nearly the same manner as is the peripheral core member described above. More particularly, alternate forms may be mounted on the circular table 52 having a length substantially coextensive with that of the desired stiffening member, but having short lateral extent. In this way, two connected and continuous stiffening member inserts may be made at the same time by winding the ribbon and a third resinous material about such form as described above, and solidifying the two connecting stiffening members. The third resinous material may be of the same types as described with reference to the first resinous material.

After solidifying and removal from the form, the connected stiffening member inserts are separated by severing one from the other along the short run defined by the short lateral extent of the form. Thus a single machine may be used to make these additional components of the shelf. An example of such a stiffening member insert 63 along with the peripheral core member 61 prior to encapsulation as described below is shown in Figure 6.

Referring now to Figure 7, a corner reinforcing member 65 for reinforcing the corner structures 20 of the shelf 10 is illustrated in detail. As can be seen there, this reinforcing member 65 includes a generally triangular portion 60 formed with the frusto-conical sleeve 22 therein and having at its right angular apex a radius 62 which conforms to the inside of the corner of the peripheral core member 61. Projecting from the radius are two flat portions 64 each of which is formed with a plurality of apertures 66. Relief holes 67 may also be provided in the triangular portion 60 to define thin walls 69 adjacent the portions 64 that also are formed with apertures 66. As can be seen in Figure 7, the radius 62 and flat portions 64 are shaped to conform to a corner and adjacent linear runs of the side surfaces of peripheral core member 61.

The corner reinforcing member 65 can be injection mold from a fourth resinous material which is the same as any of those described with reference to the peripheral core and stiffening members.

Each of the internal components of the shelf 10, namely the peripheral core member 61, stiffening members 63 and corner reinforcing structures 65 are assembled together as shown generally in Figure 6. It may be preferable to arrange the corner structures 65 and stiffening insert 63 in a suitably desinged form at the ribbon forming machine so that the ribbon 51 is wound about these components during the winding operation. The provision of the heater 59 and the still-warm state of the resinous material comprising the ribbon will cause the corner structures and insert to adhere to the wound ribbon periphery at this time so that the assembly can then be directly inserted in the mold. Thereafter, this assembly is encapsulated in a second resinous material. More particularly, as shown in Figure 8, the assembly is placed in the mold cavity of a two part mold 70 held for reciprocal movement of the two parts in a diagrammatically illustrated molding machine 72. The two part mold is closed about the assembly and the second resinous material may be injected into the mold cavity to completely encapsulate the assembly. It will be appreciated that when the second resinous material is injected into the cavity, it fills the apertures 66 in the flat portions 64 and thin walls 69 of the corner reinforcing members 65. This physical relationship enhances the structural bond between the corner reinforcing members and the peripheral core member 61.

The second resinous material may also be thermoplastic or thermosetting. Preferred thermoplastics are polypropylene, polyethylene terephthate (PET), polystyrene, polyphenylene sulfide, and polyethersulfone. Preferred thermosetting materials include polyester.

The present invention also incorporates a novel approach to locating components such as the peripheral core member 61 and stiffening member insert 63 within the mold cavity of the two part mold 70. As shown in Figures 9 through 11 the core member 61, for example is clamped between two clamp elements 80 and 82 formed with complementary depressions 84 and 86 near opposing edges thereof. A dimple or punch point 88 is mounted for movement toward the edge of the member 61 in registration with the pair of depressions 84 and 86. A punch point supporting tool 90 is provided with air jet opening 92 that surround the point 88 and hot air can be forced from these openings to soften the resinous material from which the member 61 is made (which as noted is preferrably thermoplastic). Accordingly, the member 61 may be positioned between the clamp elements 80 and 82 (Figure 10), clamped firmly therebetween (Figure 11), and the punch point 88 inserted into opposing edges of the member 61. The punch point thus causes the material at the edges of the member 61 to flare into the depressions 84 and 86, creating a dimple 94 (Figure 9) at each such location.

As shown in Figure 12, these dimples locate the member 61 within the cavity of the two part mold 70 permitting the second resinous material to encapsulate it on all sides. Since the first and second resinous materials are preferrably compatible and more preferrably the same, the dimples are completely disguised in the finished product.

This approach to locating the members 61 and 63 in the mold eliminates the need for complex extender pin mechanisms previously used in the art for such purpose.

In accordance with the present invention, it is preferred that the first, second, third and fourth resinous materials be compatible, that is, that they both be thermosetting or thermoplastic. Again, from the standpoint of cost, polypropylene is preferred.

Further, in the preferred embodiment, the second resinous material is a thermoplastic which is injected into the mold cavity at a temperature sufficient to melt the surface of the first, third and fourth thermoplastic materials to cause mixing or bonding therebetween. This mixing enhances the structural integrity of the shelf.

The second and fourth resinous materials may include chopped fibers such as glass, carbon, boron and synthetic fibers. Such chopped fibers in the second resinous material enhances the overall strength of the article made as described above.

In one embodiment, the fibers forming the peripheral frame member are glass, the first resinous material is polypropylene, and the second resinous material is polypropylene having 20 to 40% chopped glass fibers dispersed therein.

In a second embodiment, the fiberous material is glass, the first resinous material is polypropylene, and the second resinous material is polyester incorporating 55% chopped glass fibers. The peripheral-core member comprising glass fibers in the first resinous material is approximately 55% glass in the preferred embodiments.

While specific embodiments of the present invention have been described above in detail, it will be appreciated that this description is for purposes of illustration. Modifications may be made to the described embodiments of the composite article and the method of making it in order to adapt it to particular applications without departing from the scope of the following claims.

## Claims

1. An article, such as a shelf (10) or the like, having a periphery (12), characterized by:
a plurality of substantially continuous fibers (32) wound into a shape generally defining said periphery (12), said fibers (32) being wound substantially continuously at least one time in said shape;
a first resinous material (34) binding said continuous fibers together thereby to form a continuous peripheral core member; and
a separate outer coating of a second resinous material encapsulating said core member and intimately bound to said first resinous material (34).

2. An article such as a shelf (10), or the like, having a periphery (12), said article comprising:
a peripheral core member formed in the shape of said periphery and including a plurality of continuous fibers (39) continuously traversing said periphery at least one time and a first resinous material (34) intimately contacting and solidified about said fibers (32) thereby to bind said fibers together; and
a separate second resinous material encapsulating said core member and intimately bound to said first resinous material.

3. An article according to any one of claims 1 or 2, characterized by comprising chopped fibers dispersed within said second resinous material.

4. An article according to any one of claims 1 to 3, characterized in that fibers (32) and/or said chopped fibers are made from a material selected from the group consisting of glass, carbon, boron, and synthetic fibers.

5. An article according to any one of claims 1 to 4 further comprising:
at least one stiffening member (14, 16) spanning the distance between two opposing locations of said peripheral core member.

6. An article according to claim 5, characterized in that said stiffening member (14, 16) includes a third resinous material and is encapsulated with said peripheral core member by said second resinous material.

7. An article according to claim 5, characterized in that said stiffening member includes a plurality of substantially continuous fibers and a third resinous material binding said continuous fibers together and wherein said second resinous material encapsulates said stiffening member with said core member and is intimately bound to said third resinous material as well as to said first resinous material.

8. An article according to any one of claims 1 to 7, characterized in that said peripheral core member has a corner and in that it comprises a corner reinforcing member (20) secured in said corner of said core member.

9. An article according to claim 8, characterized in that said corner reinforcing member (20) is encapsulated with said peripheral core member by said second resinous material.

10. An article according to claim 9, characterized in that said corner reinforcing member (20) is formed with at least one portion that lies closely adjacent said peripheral core member, said portion being formed with at least one aperture (22) filled with said second resinous material when said second resinous material encapsulates said reinforcing member (20) and said core member.

11. An article according to claim 9 or 10, characterized in that said corner reinforcing member (20) is formed of a fourth resinous material, and wherein said first, second and fourth resinous materials are the same.

12. An article according to any one of claims 1 to 11, characterized in that at least one of said first, second, third and fourth resinous materials is thermoplastic.

13. An article according to claim 12, characterized in that said thermoplastic resinous material is selected from the group consisting of polypropylene, polyethylene terephthate, polystyrene, polyphenylene sulfide, and polyethersulfone.

14. An article according to any one of claims 1 to 11, characterized in that at least one of said first, second, third and fourth resinous materials is thermosetting.

15. An article according to claim 11, characterized in that said thermosetting resinous material is polyester.

16. An article according to any one of claims 1 to 15, characterized in that said substantially continuous fibers (32) are wound a plurality of times in said shape thereby to overlie themselves at least one time.

17. A process for making an article, such as a shelf (10) or the like, having a periphery, characterized by comprising the steps of:
providing a form (54) defining the shape of said periphery (12);
providing a plurality of substantially continuous fibers (32);
disposing a first resinous material (34) in intimate contact with said plurality of fibers (32);
winding said plurality of fibers (32) and said first resinous material (34) about said form (54) at least one time thereby to define said periphery of said article;
solidifying said first resinous material thereby to form a peripheral core member;
removing said peripheral core member from said form (54);
encapsulating said peripheral core member in a second resinous material;

intimately binding said second resinous material with said first resinous material; and

solidifying said second resinous material.

18. A process according to claim 17, characterized in that said continuous fibers (32) are stored on a supply and wherein said winding step comprises pulling said fibers (32) from said supply.

19. A process according to claim 18, characterized in that said pulling step comprises rotating said form (54).

20. A process according to any one of claims 17 to 19, characterized in that said first solidifying step comprises heating said first resinous material (34) to melt it and cause it intimately to contact said fibers (32).

21. A process according to claim 20, characterized in that said heating step is begun to be performed before said winding step.

22. A process according to any one of claims 17 to 21, characterized in that said encapsulating step comprises one of injection molding, compression molding, transfer molding, or wet molding said peripheral core member within said second resinous material.

23. A process according to any one of claims 17 to 22, characterized in that said intimate binding step comprises heating said second resinous material to a temperature sufficiently high to melt said first resinous material at the surface of said peripheral core member thereby to fuse said first and second resinous materials together.

24. A process according to any one of claims 17 to 23, characterized by further comprising the step of disposing at least one stiffening member (14, 16) to span opposing locations on said peripheral core member and wherein said encapsulating step includes encapsulating both said core member and said stiffening member (14, 16) in said second resinous material.

25. A process according to claim 24, characterized by further comprising the steps of:

providing a second plurality of continuous fibers;

disposing a third resinous material about said second plurality of fibers; and

solidifying said third resinous material thereby to form said stiffening member (14, 16).

26. A process according to claim 24 or 25, characterized by further comprising the steps of:

providing a form defining the shape of at least two said stiffening members (14, 16);

providing said second plurality of substantially continuous fibers;

disposing said third resinous material in intimate contact with said second plurality of fibers;

winding said second plurality of fibers and said third resinous material about said stiffening member form at least one of time whereby said second plurality of fibers are in overlaying relation with themselves at least one time,

solidifying said third resinous material thereby to form at least two connected stiffening members;

removing said connected stiffening members from said stiffening member form; and

severing said connected stiffening members at at least two locations thereby to form two said stiffening members.

27. A process according to any one of claims 17 to 26, characterized in that said article has a corner and in that it comprises the step of disposing a corner reinforcing member (20) in said corner, and wherein said encapsulating step includes encapsulating both said core member and said corner reinforcing member (20) in said second resinous material.

28. A process according to claim 27, characterized by further comprising the steps of:

forming a portion of said reinforcing member to lie closely adjacent said peripheral core member; and

forming at least one aperture in said portion of said reinforcing member; and wherein said encapsulating step includes filling said aperture with said second resinous material.

29. A process according to claim 28, characterized by further comprising the step of mixing chopped fibers with said second resinous material.

30. A process according to any one of claims 17 to 29, characterized in that said fibers (32) and said chopped fibers are made from a material selected from the group consisting of glass, carbon, boron and synthetic fibers.

31. A process according to any one of claims 17 to 30, characterized in that said steps of winding said plurality of fibers and said first resinous material about said form comprises winding a plurality of times whereby said plurality of fibers are in overlaying relation with themselves at least one time and thereby to define said periphery of said article.

32. A method according to any one of claims 17 to 31, characterized by further comprising the steps of:

forming flared projections on said peripheral core member, and wherein said encapsulating step comprises:

using said flared projections to locate said core member in a mold cavity formed in a mold member with the major portions of said core member spaced from the inner surfaces of said mold cavity; and

introducing said second resinous material into said mold cavity about said core member.

33. A process according to claim 32, characterized in that said flared projection forming step comprises the steps of:

heating a localized portion of said core member;

and
introducing a punch point into said heated localized portion of flare material thereat.

34. A process according to any one of claims 17 to 33, characterized in that at least one of said first, second and third resinous materials is thermoplastic.

35. A process according to claim 34, characterized in that said resinous material is selected from the group consisting of polypropylene and polyethylene terephthate, polystyrene, polyphenylene sulfide, and polyethersulfone.

36. A process according to any one of claims 17 to 33, characterized in that at least one of said first, second and third resinous materials is thermosetting.

37. A process according to claim 36, characterized in that said resinous material is polyester.

38. A method of locating an insert in a mold cavity in a multipart mold member to space the major portion of the surface of said insert from the inner surfaces of said mold cavity, characterized by the steps of:
forming a plurality of flared projections on said insert of sufficient extent to contact the inner surfaces of said mold cavity while leaving the major portion of the surface of said insert spaced from the inner surface of said mold cavity; and
closing said multipart mold member about said insert to bring the inner surfaces of said mold cavity into contact with said flared projections.

39. A method according to claim 38, characterized in that said insert comprises a resinous material and wherein said forming step comprises:
heating a localized portion of said insert; and introducing a punch point into said heated localized portion to flare the resinous material thereat.

Fig. 1.

Fig. 2.

Fig. 3.

Fig. 4.

Fig.5.

C

B

D

Fig.8.

Fig.7.

Fig.6.

0 261 681

Fig.10.

Fig.11.

Fig.12.

Forced Hot Air

Fig.9.